# EUROPEAN PATENT APPLICATION

(11) **EP 4 748 684 A1**
(43) Date of publication of application: **27.05.2026**
(21) Application number: 24214432.7
(22) Date of filing: 21.11.2024
(51) Int. Cl.: B62D 5/12, B62D 7/06, B62D 7/02, B62D 7/15, B66F 9/075

(54) **STEERING SYSTEM FOR COMPACT VEHICLES**

(71) Applicant: Combilift, Annahagh H18 VP65, Co. Monaghan (IE)
(72) Inventor: McVicar, Martin, Monaghan, H18 VP65 (IE); Moffett, Robert, Monaghan, H18 VP65 (IE); Whyte, Mark, Monaghan, H18 VP65 (IE); McKenna, Conor, Monaghan, H18 VP65 (IE)
(74) Representative: FRKelly

(57) **Abstract**

A steering system for a vehicle comprises a first wheel carrier and a second wheel carrier, each for mounting a steered wheel rotatably about a steering axis. A first hydraulic cylinder and a second hydraulic cylinder are provided, each having a piston and a rigid connecting rod assembly extending from the piston. Each connecting rod assembly has a first section reciprocating into and out of the cylinder and a second section rigidly extending to a pivot point on the wheel carrier offset from the steering axis. The hydraulic cylinders are pivotally mounted on the vehicle, prevented from translational movement but capable of changing orientation. Notably, the cylinders are in a vertically stacked configuration with the first cylinder mounted above the second. This arrangement allows for a compact design particularly suited for industrial vehicles like forklifts. The system enables enhanced maneuverability, including a sideward steering mode, while maintaining a narrow vehicle profile.

## Description

### Technical Field

This invention relates to hydraulic steering system for vehicles wheels, and to compact vehicles equipped with such systems.

### Background Art

Compact counterbalance vehicles (such as forklifts) are specialized industrial vehicles designed for lifting and transporting heavy loads. Counterbalance vehicles get their name from the large counterweight located at the rear of the vehicle. This counterweight balances the load being carried on the forks at the front, allowing the vehicle to lift heavy items without tipping forward. These vehicles operate on the principle of a first-degree lever, with the front axle acting as the fulcrum.

Compact counterbalance vehicles generally utilize rear-wheel steering where the front wheels do not steer. However, the rear-wheel steering system of counterbalance vehicles presents some unique challenges and limitations. When turning, the rear end of the vehicle swings out wider than the front. The tighter turning radius means the vehicle reacts more quickly to steering inputs. Operators must be careful not to turn too sharply at high speeds, which could lead to accidents or tip-overs.

Steering systems for such industrial vehicles, particularly those used in narrow aisle environments, have been the subject of continuous improvement efforts in recent years. While there has been a general move from hydraulic to electromechanical systems in order to improve the steering of such vehicles, there is still a need for improved hydraulic steering systems.

WO2019/170310 discloses an improved hydraulic steering system for vehicle wheels, particularly suited for forklift trucks but applicable to other vehicles. The key features of this steering system include:
1. A rigid connecting rod assembly extending from the hydraulic cylinder piston, comprising:
   - A first straight section that reciprocates into and out of the cylinder.
   - A second curved section rigidly extending from the first section to a pivot point on the wheel carrier.
2. The hydraulic cylinder is pivotally mounted on the vehicle:
   - Prevented from translational movement.
   - But able to change orientation as the wheel turns.
3. This arrangement eliminates lateral forces on the cylinder seals by:
   - Keeping the pivot point, connecting rod sections, cylinder axis, and pivot mount collinear.
   - Allowing the cylinder to reorient as the wheel turns.
4. The curved second section of the connecting rod:
   - Has a concavity to accommodate part of the wheel carrier.
   - Enables steering angles well beyond 90 degrees.
5. The system can be used in synchronized pairs for steering multiple wheels.

A key advantage of this prior art system is accurate steering at wide angles without lateral forces on the hydraulic seals, overcoming limitations of prior designs. The rigid assembly and pivoting cylinder mounting lead to this improved performance.

However, the implementation of such advanced steering systems (such as disclosed in WO2019/170310) in compact counterbalance vehicles has presented significant challenges. The primary obstacle has been the limited space available in these smaller vehicles. The compact nature of these vehicles necessitates a new approach to cylinder placement and configuration while still maintaining the benefits of the advanced steering system.

In particular, there has been a growing need for an adapted steering arrangement that can fit within the confined spaces of compact counterbalance vehicles while still providing the enhanced steering capabilities offered by more advanced systems.

The present teachings are directed to addressing at least some of the shortcomings of the prior art.

### Disclosure of the Invention

There is provided a steering system for a vehicle comprising a first wheel carrier and a second wheel carrier, each for mounting a steered wheel, rotatably mounted with respect to the vehicle about a steering axis to allow wheel steering, a first hydraulic cylinder and a second hydraulic cylinder, each having a piston and a rigid connecting rod assembly extending from the piston out of the cylinder, each rigid connecting rod assembly has a first section adapted to reciprocate into and out of the corresponding cylinder and a second section rigidly extending from the first section to a first pivot point where it connects to the corresponding wheel carrier at an offset from the steering axis. The hydraulic cylinders are in a vertically stacked configuration with the first cylinder mounted above the second. The hydraulic cylinders are pivotally mounted on the vehicle, prevented from translational movement but capable of changing orientation.

The vertically stacked configuration of hydraulic cylinders allows for a compact steering system design, particularly suitable for space-constrained vehicles like forklifts.

The hydraulic cylinders are pivotally mounted on the vehicle at respective second pivot points offset from the longitudinal axis of the respective cylinder. Offsetting the pivot points from the cylinder's longitudinal axis prevents collisions between components when fully extended, enabling a narrower vehicle design. The offset mount of the cylinders also helps minimise the height of the vehicle or height of the chassis by efficiently using space underneath the chassis.

Each second section is connected to a corresponding wheel carrier at a different height to accommodate the vertical stacking of the hydraulic cylinders. Connecting the second sections at different heights accommodates the vertical stacking, maintaining the compact design while allowing full steering functionality

Each wheel carrier comprises a hub, including a respective first pivot point for connecting the hub to a respective second section. Using the hub for the pivot point connection provides a sturdy and precise steering control point.

The first pivot points are at different vertical heights on the hubs. Different vertical heights for pivot points on the hubs allow for optimal geometry in the vertically stacked configuration.

Each second section is a curved member extending between a respective first section and a respective first pivot point. The curved member design of the second section enables a wider range of steering angles.

Each curved member defines a concavity to accommodate a portion of a respective wheel carrier. The concavity in the curved member accommodates the wheel carrier, allowing for a more compact design and smoother operation.

Each curved member defines a concavity to accommodate a portion of a respective hub. Accommodating a portion of the hub within the concavity further enhances space efficiency and steering range.

The first and second cylinders are synchronized such that movement of one cylinder results in a corresponding movement of the other cylinder. Synchronization of the cylinders ensures smooth and coordinated steering of both wheels.

Each cylinder comprises a passive rod extending from an opposite end of the hydraulic cylinder as the rigid connecting rod assembly. The passive rod design allows for hydraulic synchronization and balanced operation of the cylinders.

The steering system may further comprise a hydraulic circuit including a hydraulic pump, a connection from the hydraulic pump to the hydraulic cylinder, and means for controlling the flow of hydraulic fluid within the hydraulic circuit in response to a steering input.

A vehicle comprises the steering system wherein the first cylinder and the second cylinder are arranged perpendicular to a front-rear axis of the vehicle. Perpendicular arrangement of cylinders to the vehicle's front-rear axis minimizes space requirements.

There is provided a compact counterbalance vehicle comprises a chassis, at least two steerable front wheels, a third steerable wheel mounted at the rear of the vehicle, the vehicle steering system mounted to the chassis for steering the two steerable front wheels.

The compact counterbalance vehicle is operable in a normal steering mode in which the at least two steerable wheels are aligned with a front-rear axis of the vehicle and steering is controlled by the third steerable wheel.

The compact counterbalance vehicle is operable in a sideward steering mode in which the third steerable wheel is aligned perpendicular to the front-rear axis of the vehicle and steering is controlled by the at least two steerable wheels.

### Brief Description of the Drawings

The invention will be further illustrated by the following description of embodiments thereof, given by way of example only with reference to the accompanying drawings, in which:
Figs. 1-3 are perspective views of a steering system for a vehicle in accordance with the present teachings;
Fig. 4 is a side view or elevation view of the steering system of Figs. 1-3;
Figs. 5-7 are plan views of the steering system, depicted at different steering angles;
Fig. 8 is a plan view of a vehicle equipped with a vehicle steering system, depicted in a normal steering mode;
Figs. 9-10 are plan views of the vehicle of Fig. 8, depicted in a sideways steering mode; and
Fig. 11 is an overall hydraulic circuit for the vehicle steering system used in the vehicle of

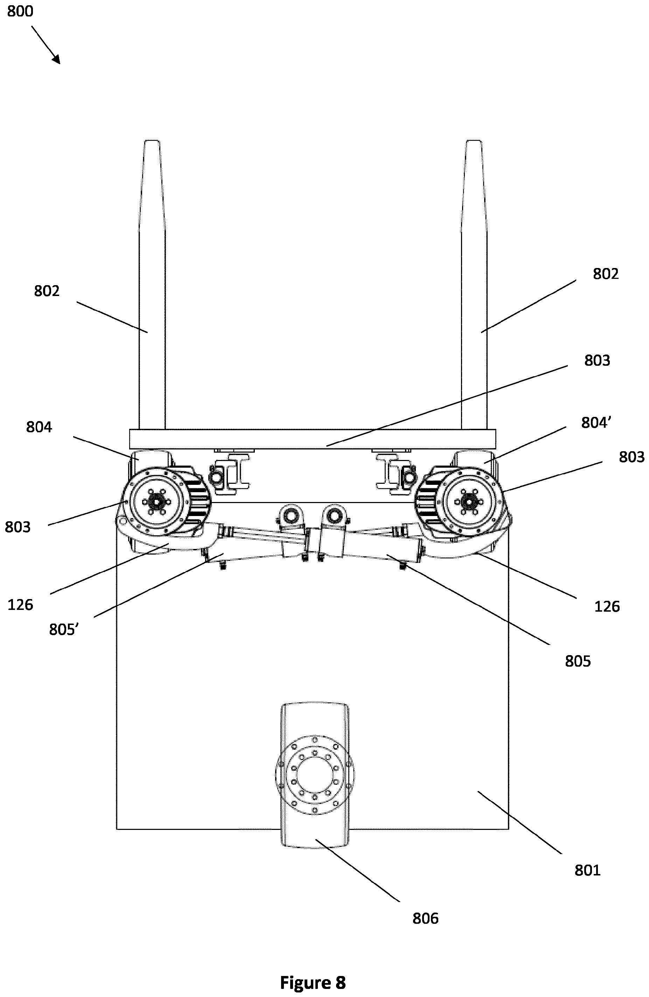

Figs. 8 to 10 in normal steering mode.

### Detailed description of preferred embodiments

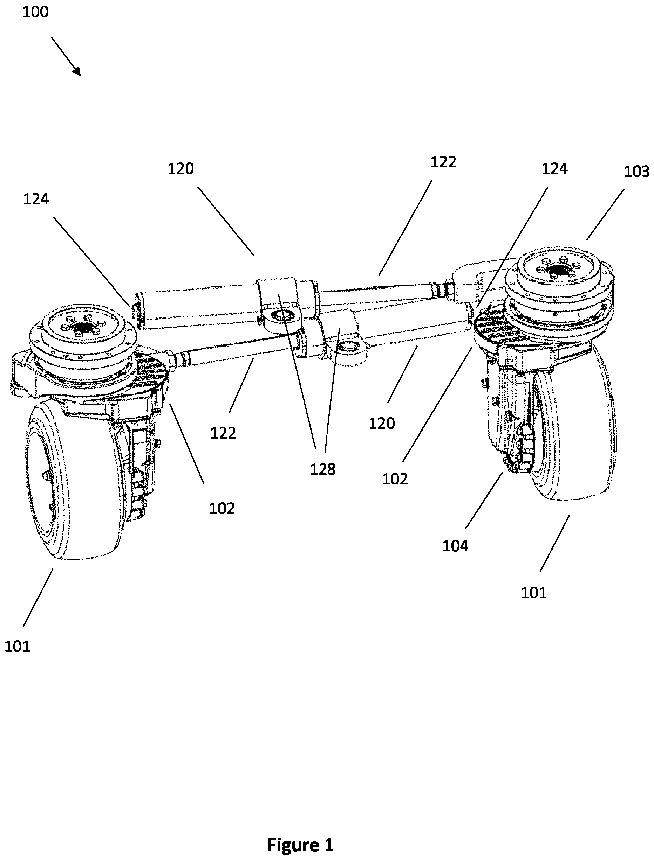

Referring to Figs. 1-3, a steering system 100 for two vehicle wheels 101 is shown in perspective view.

Each wheel 101 is mounted on a wheel carrier 102 which in turn is mounted on a bearing or hub 103 which permits the wheel to be rotated about a vertical axis relative to the chassis (not shown) of a vehicle. The hub 103 may be considered as part of the wheel carrier 102 wherein the hub 103, together with the wheel carrier 102, rotate about a shaft which extends from the chassis (not shown) of the vehicle. A drive motor 104, which may for example be hydraulic or electric, is mounted on each wheel 101 permitting the wheel to be driven in a forward or a reverse direction. It will be appreciated that the nature of the vehicle drive system, and the coupling of the drive system to the wheel, is not essential to the steering system and can be varied according to the preferences of the designer or manufacturer. So, for example, instead of a hydraulic or electric motor mounted on the wheel, an engine could be coupled to the wheel using a drive shaft or a gearing assembly. The engine could be internal combustion, hybrid, electrical, hydraulic or of any other kind.

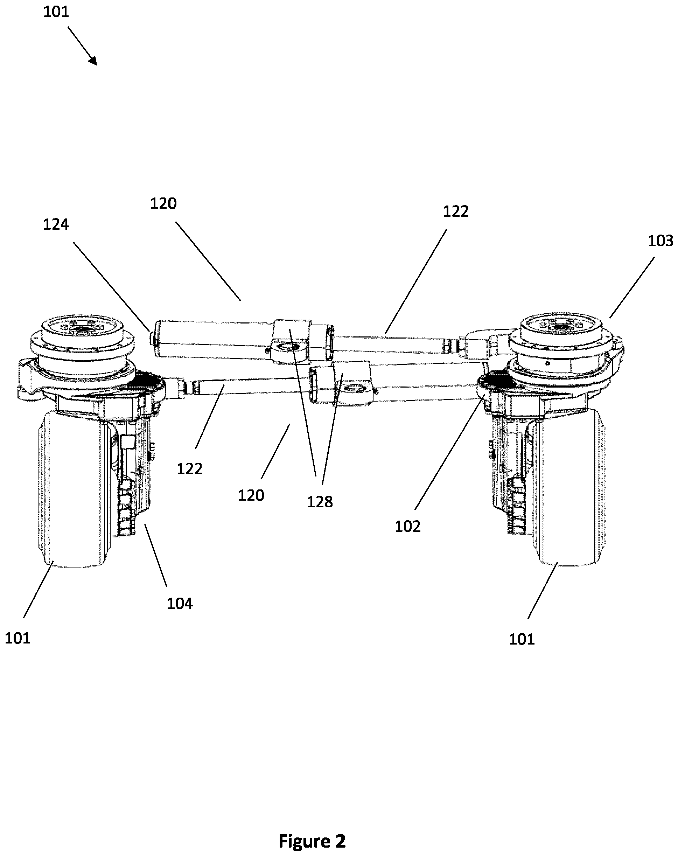

Steering of the wheels 101 is controlled by two hydraulic cylinders 120 each of which has an active connecting rod 122 and a passive rod 124 (withdrawn within the cylinders 120 in Figs. 1 and 2). Each active connecting rod 122 constitutes a first section of a rigid connecting rod assembly, and is adapted to reciprocate into and out of the cylinder as will be explained in more detail below.

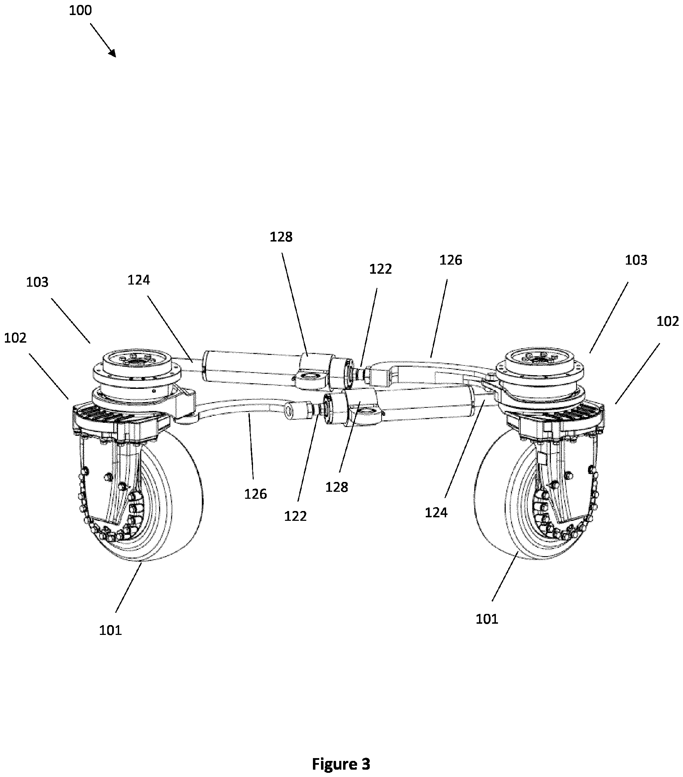

Figs. 1 and 2 show the system when the connecting rods 122 are driven out from the cylinder 120, i.e., at maximum extension from the cylinders 120. Fig. 3 shows the connecting rods 122 having been fully withdrawn into the cylinders. That is, figs. 1 and 2 show the system when the wheels 101 are steered straight ahead and Fig. 3 shows the system when the wheels 101 are steered to its maximum extent, beyond 90°, to a steering angle of approximately 135°.

A second section 126 of the rigid connecting rod assembly is provided in the form of a rigid steel plate which is rigidly coupled (i.e. with no freedom of movement, rotation or pivoting) to the connecting rod 122. Thus, as the connecting rod 122 is reciprocated into and out of the cylinder 120, the second section 126 is driven correspondingly towards and away from the cylinder in a straight line. This second section 126 is best seen in Fig. 3.

The passive rods 124 are uncoupled at their free end and serve to allow the two cylinders 120 of the steering system 100 to be hydraulically coupled to and synchronized in a push-pull manner described further below. This passive rods could be dispensed with if such synchronization is not required, or could be substituted by an alternative synchronization mechanism such as a separate synchronizing cylinder or by appropriate hydraulic pumping circuits driving a steering mechanism on another wheel.

A priming valve (not shown) is provided in the piston of the cylinders. As is known in the art, such a priming valve is useful for priming the system on initial start-up and for keeping the cylinders primed and synchronized in use in the multi-cylinder system in accordance with the present teachings.

The hydraulic cylinders 120 are pivotally mounted on the vehicle such that they are prevented from translational movement relative to the vehicle but capable of changing its orientation with respect to the vehicle. The pivot mount for each cylinder is provided by a collar 128 affixed to the outside of the respective cylinder 120, which is in turn attached to the vehicle chassis, as will be explained in more detail hereinafter.

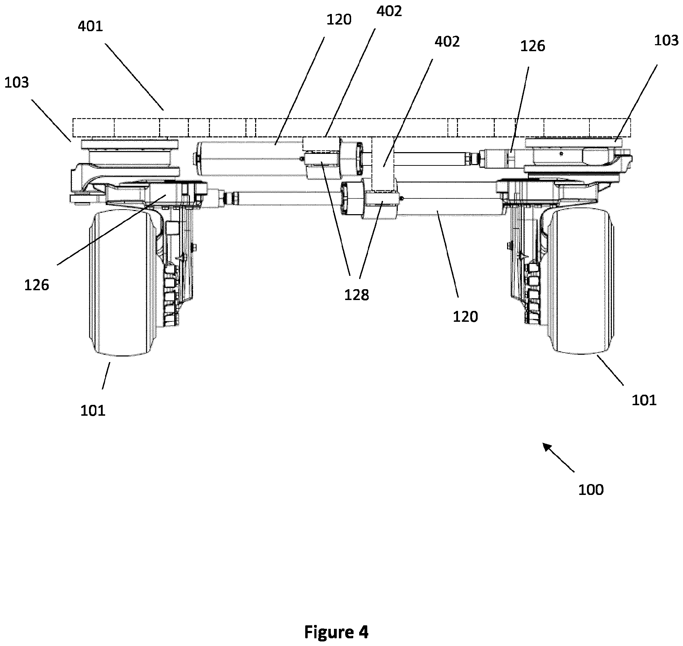

Turning to Fig. 4 this shows the steering system 100 is attached to a chassis 401 of a vehicle. Fig. 4 provides a side view of such an arrangement wherein it can be seen that the cylinders 120 are vertically stacked so that one cylinder is mounted above the other cylinder. In the preferred configuration each collar 128 is connected to the vehicle by a corresponding shaft 402. While only the shaft 402 connecting the lower cylinder 120 can be seen in Fig. 4, a shorter shaft is also provided for the upper cylinder 120, which is not visible within the collar 128 of the upper cylinder 120. Both shafts 402 extend vertically from the chassis 401 and are fixedly attached to the chassis so that each collar 128, along with the corresponding hydraulic cylinder 120, rotates about the corresponding shaft 402.

The wheel carriers 102 are also mounted to the chassis 401 of the vehicle. Specifically, a shaft (not shown) extends vertically down from the chassis 401 into each hub 103 of the wheel carriers 102. The hubs 103, corresponding wheel carriers 102 and wheels 101 rotate about these shafts.

Each rigid connecting rod assembly is connected to a corresponding wheel carrier 102 at a different height to accommodate the vertical stacking of the cylinders 120. Specifically, the second section 126 of each rigid connecting rod assembly is connected to a corresponding wheel carrier 102 at a different height. In the exemplary configuration of Fig. 4 each second section 126 is connected to the corresponding hub 103 at differing heights. However, the person skilled in the art will appreciate that the second sections 126 can be connected at any vertical position on the wheel carrier 102 as long as the vertically stacked configuration of the cylinders 120 is maintained. The arrangement of the cylinders 120, one on top of the other, saves considerable space and allows the steering system 100 to be used in compact vehicles.

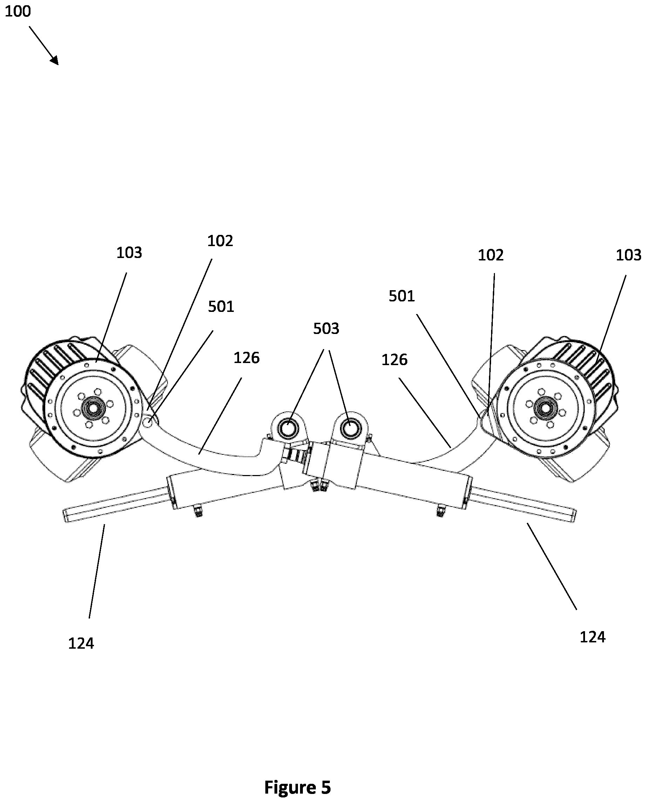

Referring to Figs. 5-7, the operation of the steering system for vehicle wheels in accordance with the present teachings is shown in plan view.

It can be seen, moving from Fig. 5 to Fig. 6 to Fig. 7, that each rigid connecting rod assembly 122, 126 is progressively pushed away from the corresponding cylinder 120. Each second section 126, being rigidly mounted on the corresponding first section (connecting rod) 122, maintains its angular disposition and is linearly translated away from the cylinder 120.

The distal end of each second section 126 (i.e. the end farthest from the corresponding cylinder) is pivotally coupled to the corresponding wheel carrier 102 at a pivot point 501 (only visible in the left hand side portion of the steering system but also present in the right hand side portion). As this pivot point 501 is offset from the centre of rotation 502 of the hub 103, it translates laterally relative to the cylinder 120 as the connecting rod 122 is extended. Due to the pivot mounting of the cylinder 120 on the chassis (shown in Fig. 4), the cylinder orientation changes as the connecting rod extends, as can be seen in the progression from Fig. 5 to Fig. 6 to Fig. 7.

It should be noted that the pivot mounting of the cylinders 120 on the chassis at pivot points 503 is configured so that the pivot points 503 are offset from the central or longitudinal axis of the cylinders 120. That is, each pivot point 503 of each cylinder is offset from the longitudinal axis of the respective cylinder 120. This ensures that when each connecting rod 122 is fully withdrawn and each passive rod 124 is fully extended (as shown in Figs. 3 and 5) the extended passive rod 124 will not contact the nearest wheel carrier 102, hub 103 or any other component of the steering system. It can be seen that as the connecting rod 122 is withdrawn and the corresponding passive rod 124 extends the passive rod pivots as part of the cylinder 120. Due to the offset of the pivot point 503 the distal end of the passive rod 124 (the end of the passive rod farthest from the pivot point 503) does not collide with any component of the steering system 100. Without such an offset to the pivot points 503 these pivot points would have to be spaced further apart to avoid such a collision. That is, the cylinders 120 while still maintaining a vertically stacked configuration would have to have pivot points 503 which are further apart. This would mean that the wheels 101 of the vehicle would have to be further apart and the vehicle would have to be wider. The offset pivot points 503 ensures that the width of the vehicle can be minimized and therefore this configuration is particularly suited to compact industrial vehicles.

A further benefit of the offset mounting is the reduced height i.e., without the offset mounting more room (height) would be needed to mount the cylinders. As previously mentioned with respect to Fig. 4, each collar 128 is connected to the vehicle by a corresponding shaft 402. The shaft 402 connecting the lower cylinder 120 would not be able to pass by the upper cylinder 120 if the lower mounting was not offset from the lower cylinder. If the mounting of the lower cylinder was along the central axis of the lower cylinder 120 some further components would have to be included to mount the lower cylinder and these would occupy more room necessitating the raising of the height of the chassis 401. In the configuration described herein the cylinders 120 stay as close as possible to the underside of the chassis 401.

The lack of lateral movement between the cylinder 120, the first section 122 and the second section 126, eliminates strains on the cylinder seals. Although some lateral forces are applied to the cylinders 120 connecting rods 122, 124 due to the offset pivot points 503 these forces are not significant. Furthermore the use of through rod cylinders in this context is beneficial as each cylinder rod is supported at both ends with the sealing glands irrespective whether the rod is retracted or extended. This reduces seal wear and decreases the effects of buckling.

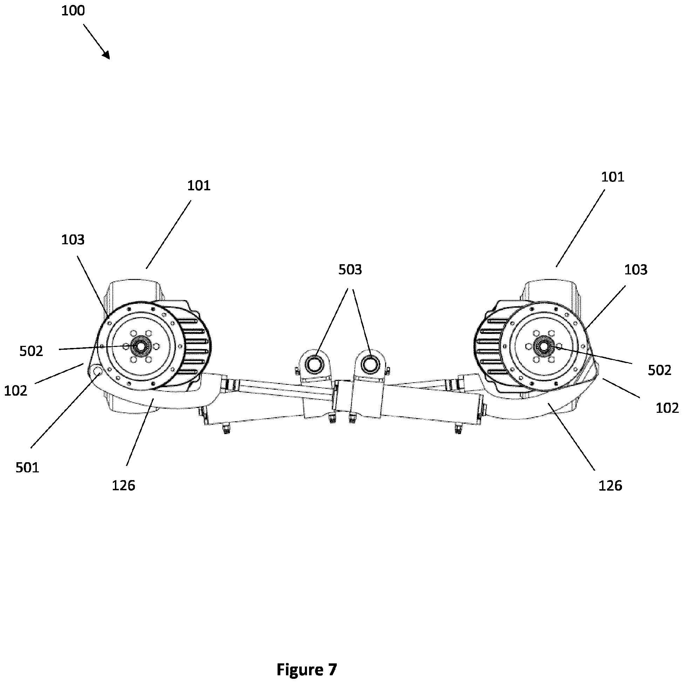

It can be seen that the second section 126 is in the form of a curved member extending between the first section 122 and the pivot point connection 501. The curved member defines a concavity which may accommodate a portion of the wheel carrier or hub. This can be seen in particular in Fig. 7 where the concavity accommodates part of the hub 103 when the wheels 101 are steered straight ahead. Thus, the arcuate shape of the second section 126 transmits the forces from the pivot point in a straight line passing through a part of the hub.

Depending on the shapes and dimensions chosen, the maximum steering angle may be more or less than 135°, according to the wishes of the designer. In the preferred embodied one second section 126 is mounted above the respective wheel carrier 102 and accommodates part of the hub 103 within the concavity of the curved second section 126. The other section 126 is mounted below the respective wheel carrier 102 and accommodates part of the wheel carrier 102 (or lower portion of the hub 103) within the concavity of the curved second section 126. In this preferred embodiment the curved section sections 126 they are on the same horizontal plane as the centre of each respective cylinder. However, alternative arrangements are possible wherein the second sections 126 are mounted at different points and accommodate a different portion of steering system within the concavity of these sections.

In the illustrated embodiment, the connecting rod 122 is fitted into and rigidly affixed (such as by welding) within a socket formed in the proximal end of the second section. However other rigid mounting arrangements can be employed also. Furthermore, the use of the term "assembly" (as in the rigid connecting rod assembly) does not imply that the first and second sections must be separate members that are assembled together. The rigid connecting rod assembly could be an integrally formed component with identifiable portions including a first portion or section adapted to reciprocate within the cylinder and a second portion or section extending from the first portion to the wheel carrier.

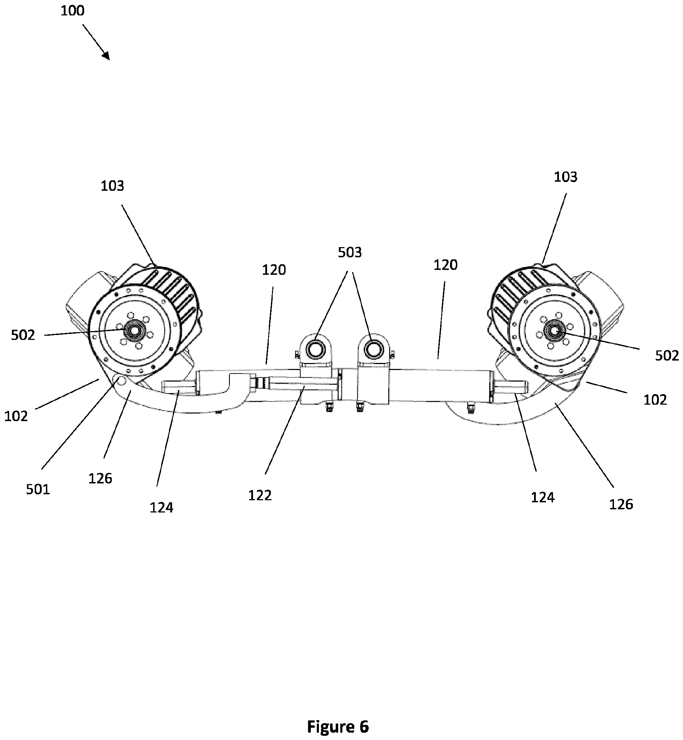

It can be observed in Fig. 6 that when the active connecting rods 122 are partially withdrawn such that the passive rods 124 are correspondingly partially extended the two cylinders 120 are collinear in a vertically stacked configuration.

Referring first to Fig. 8, a forklift truck 800 is shown in plan view. The view of the vehicle is simplified to show the chassis 801, the forks 802, the fork-lifting mechanism 803, and the wheels and steering arrangement, which will now be described.

A left front wheel 804 and a corresponding steering cylinder 805, as previously described in relation to Figs. 1-7, are mounted on the vehicle. A right front wheel 804' and a corresponding steering cylinder 805' are also provided on the vehicle. At the rear of the vehicle a steerable, driven or undriven rear wheel 806 is mounted and provided with its own (conventional) steering cylinder. However, the conventional steering cylinder could be replaced with a steering system for a vehicle wheel according to the present teachings.

The vehicle is shown in Fig. 8 is in normal steering mode. All three wheels 804, 804', and 806 are aligned with the front-rear axis of the vehicle, i.e. aligned parallel with the forks 802. In this steering mode, the steering system may be inactive with the front wheels fixed, and the vehicle can be steered by the rear wheel alone, i.e. withdrawing or extending the rod from the rear wheel cylinder to rotate the rear wheel 806 about its vertical axis. Any suitable means can be used to steer the rear wheel 806.

It should be appreciated that the cylinders 805, 805' are mounted generally perpendicular to longitudinal axis of the vehicle (front-rear axis of the vehicle), which minimises the space requirements for the steering system in accordance with the present teachings and makes such a system particularly suited to compact vehicles. While the rear wheel 806 is spaced well apart from the from wheels 804, 804' it should be appreciated that the rear wheel 806 can be positioned much closer to the front wheels due to the perpendicular mounting of the cylinders 805, 805'.

It can also be seen in Fig. 8 that each of the previously described curved members or curved second sections 126 defines a concavity which accommodate a portion of the hub 103 when the vehicle is in normal steering mode. That is, the maximum possible portion of the hub 103 is accommodated within the concavity of the curved second section 126 when the vehicle is in normal steering mode.

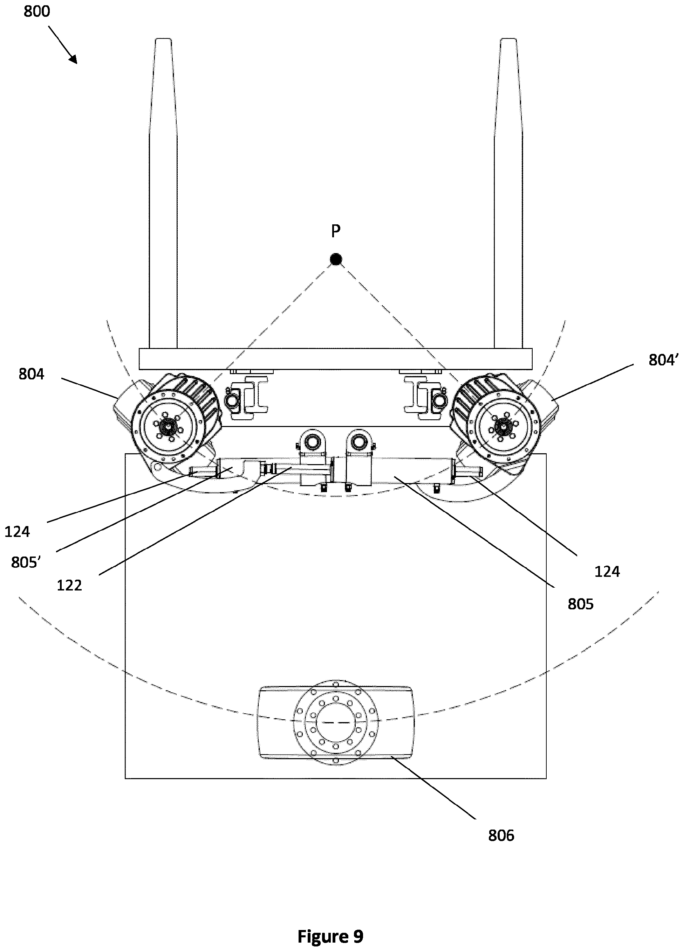

In Fig. 9 the vehicle is shown in sideward mode. The rear wheel 806 has been turned through 90°to be aligned perpendicular to the front-rear axis of the vehicle, so that the vehicle can be driven sideways and steered using the front wheels 804, 804'. Specifically, the active connecting rods 122 have been partially withdrawn to turn the wheels 804, 804'. The passive rods 124 extend proportionally to the withdrawal of the connecting rods 122. In this mode, the rear wheel 806 is fixed in position and follows an arc whose direction of curvature and radius are determined by the angle of the front wheels 804, 804'. Specifically, the vehicle rotates about a point P, which is outside a triangle defined by the three wheels 804, 804', and 806 when viewed in plan view. In can also be seen that in this sideward mode of steering the cylinders 805, 805' are positioned directly on top of each other so that they occupy the same vertical plane. In Fig. 9, only one active connecting rod 122 is visible due to the fact that the cylinders 805, 805' are positioned directly on top of each other.

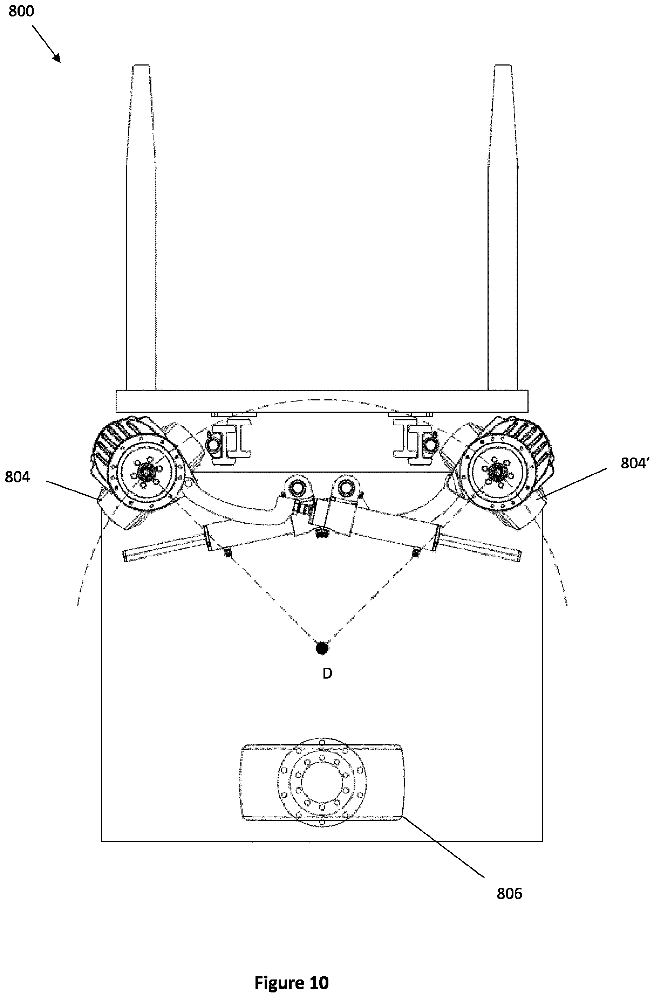

In Fig. 10 the vehicle is also shown in sideward mode. The rear wheel 806 remains at 90° so that it is aligned perpendicular to the front-rear axis of the vehicle. The vehicle can still be driven sideways and steered using the front wheels 804, 804'. However, the front wheels have been turned to the maximum steering angle while still in this mode. When steering the rear wheel 806 is fixed in position and follows an arc whose direction of curvature and radius are determined by the angle of the front wheels 804, 804'. Specifically, the vehicle rotates about a point D, which is at the in-centre of a triangle defined by the three wheels 804, 804', 806 when viewed in plan view.

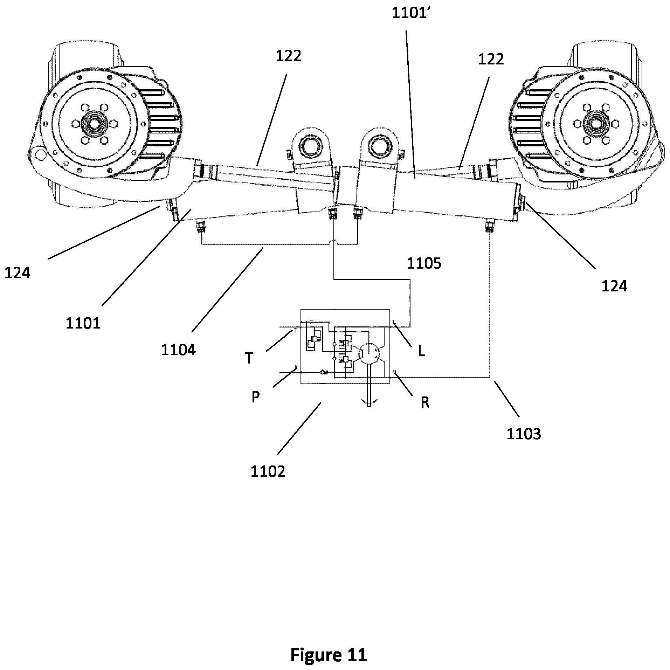

The respective steering cylinders 804, 804' for each front wheel are synchronized so that, as shown in Figs. 8-10, the angle adopted by left front wheel 804 is mirrored by right front wheel 804' in the opposite direction. The steering system for vehicle wheels in accordance with the present teachings may be considered to comprise a right-hand section (to steer a right-hand wheel) and a left-hand section (to steer a left-hand wheel) which are connected to a hydraulic circuit as shown in Fig. 11.

In Fig. 11 it can be seen that the cylinder 1101 of a left-hand section of the steering system 100 is coupled to the cylinder 1101' of a right-hand section of the system 100 by a hydraulic circuit which comprises a control circuit 1102, a left-hand pressure line 1105 leading to/from port L of the control circuit 1102, a bridging line 1104, and a right-hand pressure line 1103 leading to/from port R. Each cylinder has a front chamber (with the connecting rod 122) and a rear chamber (with the passive rod 124), the chambers being filled with hydraulic fluid and separated by a piston on which the rods (connecting rod 122 and passive rod 124) are mounted.

The front chamber of cylinder 1101 is connected to left-hand pressure line 1105. The rear chamber of cylinder 1101 is connected to the front chamber of cylinder 1101' by the bridging line 1104. The rear chamber of cylinder 1101' is connected to right-hand pressure line 1103. The cylinder volumes are equal and the system is balanced so that, as shown in Fig. 11 both rods 122 adopt the same position along their respective cylinders i.e., fully extended.

The control circuit 1102 has ports P and T connecting to a hydraulic pump and tank, respectively. A rotary pump is controlled by a shaft of a steering column so that rotation of the steering column in one direction causes hydraulic fluid to be pumped through port L into left-hand pressure line 1105 (and a corresponding volume of fluid to be returned via port R), while rotation of the column in the other direction causes the opposite flow to occur. An arrangement of one-way valves and solenoid valves handles the resulting flow of hydraulic fluid within the circuit.

When left-hand line 1105 is pressurized, the piston of cylinder 1101 is driven rearwardly, withdrawing the connecting rod 122 of the steering system 100 into the cylinder. Simultaneously, this pressurizes the rear chamber of cylinder 1101 and fluid flows through bridging line 1104 into the front chamber of cylinder 1101', driving the piston of the cylinder 1101' rearwardly to the same degree. Pressurizing the right-hand line 1103 has the opposite effect, with fluid flows being reversed and the pistons being driven forwardly in each case.

It should be appreciated that the vehicle steering system for the front wheels in accordance with the present teachings has a number of advantages including:
- Increased steering angle;
- Smoother steering operation, the same displacement on both sides of each cylinder;
- The same number of revolutions of the vehicle steering wheel left and right; and
- Cylinders are hydraulically synchronized.

In the present teachings "vertical" has been used to describe the configuration or positioning of the cylinders. Vertical in this context should be considered as perpendicular to the vehicle's normal operating surface or plane. For most vehicles, this would be perpendicular to the ground when the vehicle is on a level surface. The vertical axis is perpendicular to the vehicle's longitudinal (front-to-back) axis4. This longitudinal axis runs from the nose to the tail of the vehicle.

With respect to the steering system for vehicle wheels in accordance with the present teachings the vehicle in question is a forklift truck but the steering system can be implemented in any vehicle for which hydraulic steering is suitable.

The invention is not limited to the embodiments described herein which may be varied within the scope of the claims that follow.

## Claims

1. A steering system for a vehicle comprising:
a first wheel carrier and a second wheel carrier, each wheel carrier for mounting a steered wheel, each wheel carrier being rotatably mounted with respect to the vehicle about a steering axis to allow the wheel to be steered;
a first hydraulic cylinder and a second hydraulic cylinder (20), each hydraulic cylinder having a piston therein and a rigid connecting rod assembly extending from the piston out of the cylinder;
wherein each rigid connecting rod assembly comprises a first section adapted to reciprocate into and out of the corresponding cylinder and a second section rigidly extending from the first section to a first pivot point where each second section is connected to the corresponding wheel carrier at an offset from the steering axis;
wherein the first hydraulic cylinder and the second hydraulic cylinder are each pivotally mounted on the vehicle such that they are prevented from translational movement relative to the vehicle but are capable of changing their orientation with respect to the vehicle; and
wherein the first hydraulic cylinder and the second hydraulic cylinder are in a vertically stacked configuration such that the first hydraulic cylinder is mounted above the second hydraulic cylinder.

2. A steering system according to claim 1, wherein each of the first hydraulic cylinder and the second hydraulic cylinder is pivotally mounted on the vehicle at a respective second pivot point, each second pivot point being offset from a longitudinal axis of the respective hydraulic cylinder.

3. A steering system according to claim 1 or 2, wherein each second section is connected to its corresponding wheel carrier at a different height relative to the other second section, thereby accommodating the vertical stacking of the first and second hydraulic cylinders..

4. A steering system according to any one of claims 1 to 3, wherein each wheel carrier comprises a hub, and wherein each first pivot point is located on the respective hub for connecting the hub to the respective second section.

5. A steering system according to claim 4, wherein the first pivot points on the respective hubs are located at different vertical heights relative to each other.

6. A steering system according to any one of claims 1 to 5, wherein each second section comprises a curved member extending between the respective first section and the respective first pivot point.

7. A steering system according to claim 6, wherein each curved member defines a concavity configured to accommodate a portion of the respective wheel carrier.

8. A steering system according to claim 7 when dependent on any one of claims 4 to 6 wherein the concavity of each curved member is configured to accommodate a portion of the respective hub.

9. A steering system according to any one of claim 1 to 8, wherein the first hydraulic cylinder and the second hydraulic cylinder are hydraulically synchronized such that movement of one cylinder results in a corresponding movement of the other cylinder.

10. The steering system according to claim 9, wherein each of the first hydraulic cylinder and the second hydraulic cylinder comprises a passive rod extending from an end of the hydraulic cylinder opposite to the end from which the rigid connecting rod assembly extends.

11. A steering system according to any preceding claim, further comprising a hydraulic circuit including a hydraulic pump, a connection from the hydraulic pump to the hydraulic cylinders, and means for controlling the flow of hydraulic fluid within the hydraulic circuit in response to a steering input.

12. A vehicle comprising a steering system according to any of claims 1-11 wherein the first hydraulic cylinder and the second hydraulic cylinder are arranged perpendicular to a front rear axis of the vehicle.

13. A compact counterbalance vehicle comprising:
a chassis (401);
at least two steerable front wheels (101);
a third steerable wheel (806) mounted at a rear of the vehicle; and
a vehicle steering system according to any of claims 7 to 11 mounted to the chassis for steering the two steerable front wheels (101).

14. The compact counterbalance vehicle according to claim 13, wherein the vehicle is operable in a normal steering mode in which the at least two steerable wheels are aligned with a front-rear axis of the vehicle and steering is controlled by the third steerable wheel.

15. The compact counterbalance vehicle according to claim 13 or 14, wherein the vehicle is operable in a sideward steering mode in which the third steerable wheel is aligned perpendicular to the front-rear axis of the vehicle and steering is controlled by the at least two steerable wheels.
